# EUROPÄISCHE PATENTSCHRIFT

(11) **EP 4 402 390 B1**
(45) Veröffentlichungstag und Bekanntmachung des Hinweises auf die Patenterteilung: **29.04.2026**
(21) Anmeldenummer: 22786282.8
(22) Anmeldetag: 01.09.2022
(51) Int. Cl.: F16D 65/00, B62D 25/18, B62J 15/04

(54) **VORRICHTUNG ZUM SAMMELN VON ABRIEBPARTIKELN**
DEVICE FOR COLLECTING WEAR PARTICLES
DEVICE FOR COLLECTING WEAR PARTICLES

(30) Priorität: 14.09.2021 DE 102021210124
(43) Veröffentlichungstag der Anmeldung: 24.07.2024
(73) Patentinhaber: Continental Reifen Deutschland GmbH, 30175 Hannover (DE)
(72) Erfinder: WINKLER, Jens, 30165 Hannover (DE); KOMISCHKE, Ralf, 30165 Hannover (DE); GANDYRA, Stefan, 30165 Hannover (DE); DINIC, Miroslav, 30165 Hannover (DE); MAGINESS, Brian, 30165 Hannover (DE)
(74) Vertreter: Continental Corporation
(86) Internationale Anmeldenummer: PCT/DE2022/200201
(87) Internationale Veröffentlichungsnummer: WO 2023/041125

(56) Entgegenhaltungen:
- WO-A1-2019/223914
- WO-A1-86/04030
- GB-A- 2 004 823
- GB-A- 2 250 249
- US-A1- 2022 205 499

## Beschreibung

Die Erfindung betrifft eine Vorrichtung zum Sammeln von bei der Verwendung eines Fahrzeugs im Radbereich entstehenden Abriebpartikeln, mit einem zumindest abschnittsweise gebogenen Auffangprofil für Abriebpartikel, wobei das Auffangprofil auf einer Innenseite eine oder mehrere Auffangöffnungen aufweist, über welche Abriebpartikel in das Auffangprofil gelangen können.

Ferner betrifft die Erfindung ein Fahrzeug mit mehreren Rädern und zumindest einer Vorrichtung zum Sammeln vom im Nahbereich eines Rads entstehenden Abriebpartikeln.

Während der Verwendung von Fahrzeugen entstehen im Radbereich aufgrund von Verschleißeffekten Abriebpartikel, welche unter anderem auf den Reifenabrieb und den Straßenbelagsabrieb zurückgehen. Derartige Abriebpartikel werden auch als "tire and road wear particles" bezeichnet. Darüber hinaus entstehen Abriebpartikel beim Abbremsvorgang, wobei sich die Abriebpartikel vom Bremsbelag und der Bremsscheibe des Fahrzeugs lösen können.

Die im Radbereich eines Fahrzeugs entstehenden Abriebpartikel gelangen in die Umgebung. Um die Einleitung von Abriebpartikeln in die Umgebung zu verringern, sind im Stand der Technik bereits Abriebsammler bekannt, welche die im Radbereich entstehenden Abriebpartikel über ein elektrostatisches Feld an einer Elektrode sammeln. Diese und andere bekannte Systeme erfordern jedoch die Zuführung von elektrischer Energie und die Verwendung von elektrischen oder elektronischen Komponenten.

Für Bremsscheiben sind weitere Abriebsammler im Stand der Technik bekannt. Die US 2022/0205499 A1 betrifft eine Sammelvorrichtung zum Sammeln von Partikeln, die im Bremssystem einer Transportanlage entstehen. Die WO 2019/223914 A1 betrifft einen Bremsstaubpartikelfilter sowie eine Scheibenbremsanordnung mit einem Bremsstaubpartikelfilter. Überdies sind Wasserableitvorrichtungen für Fahrzeuge aus dem Stand der Technik bekannt. Die GB 2 250 249 A betrifft eine Auffangvorrichtung für Matsch bzw. einen Kotflügel. Die GB 2 004 823 A betrifft eine Spritzschutzvorrichtung zur Verwendung an einem Straßenfahrzeug. Weiterer Stand der Technik zum technologischen Hintergrund findet sich in der WO 86/04030 A1.

Die der Erfindung zugrundeliegende Aufgabe besteht somit darin, ein Sammeln von im Radbereich eines Fahrzeugs entstehenden Abriebpartikeln zu ermöglichen, ohne dass hierfür elektrische Energie aufgewandt und/oder elektrische bzw. elektronische Komponenten erforderlich sind.

Die Aufgabe wird gelöst durch eine Vorrichtung zum Sammeln von bei der Verwendung eines Fahrzeugs im Radbereich entstehenden Abriebpartikeln, mit einem zumindest abschnittsweise gebogenen Auffangprofil für Abriebpartikel, wobei das Auffangprofil auf einer Innenseite eine oder mehrere Auffangöffnungen aufweist, über welche Abriebpartikel in das Auffangprofil gelangen können, wobei die erfindungsgemäße Vorrichtung einen Sammelbehälter für aufgefangene Abriebpartikel aufweist, wobei der Sammelbehälter zumindest eine Abführöffnung aufweist, über welche Wasser aus dem Sammelbehälter abführbar ist, wobei der Sammelbehälter zumindest einen Filter aufweist, welcher dazu eingerichtet ist, einen Austritt von Abriebpartikeln aus der Abführöffnung zu verhindern. Das Auffangprofil umfasst mehrere Partikelführungskanäle, über welche die durch die eine oder die mehreren Auffangöffnungen in das Auffangprofil gelangten Abriebpartikel in den Sammelbehälter führbar sind, wobei die Partikelführungskanäle nebeneinander angeordnet sind und/oder zumindest abschnittsweise parallel zueinander verlaufen, wobei die mehreren Partikelführungskanäle jeweils einen oder mehrere Fangstege aufweisen, welche dazu eingerichtet sind, die durch die eine oder die mehreren Auffangöffnungen in das Auffangprofil gelangten Abriebpartikel an dem Herausfallen aus der einen oder den mehreren Auffangöffnungen zu hindern.

Durch die Verwendung eines Auffangprofils mit Partikelführungskanälen, über welche die Abriebpartikel in einen Sammelbehälter führbar sind, sind keine elektrischen oder elektronischen Bauteile erforderlich, sodass die Vorrichtung vergleichsweise einfach und kostengünstig realisierbar ist. Ferner ist die erfindungsgemäße Vorrichtung unempfindlich gegenüber Feuchtigkeit, da feuchtigkeitsbedingte Funktionsbeeinträchtigungen von elektrischen oder elektronischen Bauteilen nicht auftreten können.

Die Innenseite des Auffangprofils, auf welcher sich die eine oder die mehreren Auffangöffnungen befinden, ist bei der Verwendung der Vorrichtung dem Rad bzw. dem Reifen zugewandt. Regen- und Spritzwasser können zur Reinigung des Auffangprofils und zum Spülen von Abriebpartikeln in den Auffangbehälter genutzt werden. Das Auffangprofil kann im Radkasten hinter dem Fahrzeugrad und/oder abschnittsweise um das Fahrzeugrad umlaufend ausgebildet sein. Der Sammelbehälter der Vorrichtung weist eine Partikeleinlassöffnung auf, über welche die von dem Auffangprofil aufgefangenen Abriebpartikel in den Sammelbehälter gelangen können. Durch die Partikelführungskanäle werden Partikelführungspfade vorgegeben, entlang welchen sich die Abriebpartikel in Richtung des Sammelbehälters bewegen. Etwaiges Regen- und Spritzwasser wird ebenfalls entlang der Partikelführungspfade innerhalb der Partikelführungskanäle geführt, sodass die innerhalb der Partikelführungskanäle anhaftenden Abriebpartikel durch das Regen- und Spritzwasser durch die Partikeleinlassöffnung in den Sammelbehälter transportiert werden. Der Sammelbehälter und das Auffangprofil können, beispielsweise zum Zwecke der Reparatur und/oder Wartung, zerstörungsfrei lösbar miteinander verbunden sein.

In einer bevorzugten Ausführungsform der erfindungsgemäßen Vorrichtung sind die mehreren Partikelführungskanäle dazu eingerichtet, die Abriebpartikel durch Schwerkraft und/oder Ausnutzung der Bewegungsenergie der Abriebpartikel in den Sammelbehälter zu leiten. Somit kann ein Sammeln der Abriebpartikel in dem Sammelbehälter realisiert werden, ohne dass der Vorrichtung elektrische Energie zugeführt werden muss. Die Vorrichtung kann also stromlos verwendet werden und ist somit auch unempfindlich gegen Feuchtigkeit. Ferner ist die Montage und der Einbau der Vorrichtung vergleichsweise einfach, da der Anschluss an das Bordnetz des Fahrzeugs nicht erforderlich ist.

Erfindungsgemäß weist der Sammelbehälter zumindest eine Abführöffnung auf, über welche Wasser aus dem Sammelbehälter abführbar ist. Die zumindest eine Abführöffnung kann ein Loch sein. Die Abführöffnung kann mit einem Abführkanal verbunden sein. Eine oder mehrere Abführöffnungen können im Boden des Sammelbehälters angeordnet sein. Ferner können eine oder mehrere Abführöffnungen in der Seitenwand des Sammelbehälters angeordnet sein. Das in den Sammelbehälter gelangte Spritz- und Regenwasser kann über die eine oder die mehreren Abführöffnungen, welche beispielsweise im Boden des Sammelbehälters angeordnet sind, aus dem Sammelbehälter entweichen.

Erfindungsgemäß weist der Sammelbehälter zumindest einen Filter auf, welcher dazu eingerichtet ist, ein Austritt von Abriebpartikeln aus der Abführöffnung zu verhindern. Der Filter kann an oder in der Abführöffnung angeordnet sein. Der Filter kann auch beabstandet von der Abführöffnung angeordnet sein. Es können ein oder mehrere Filter vorhanden sein. Der Filter ist beispielsweise in regelmäßigen oder unregelmäßigen Abständen zu reinigen oder zu wechseln. Zum Reinigen oder Wechseln des Filters kann der Sammelbehälter von dem Auffangprofil gelöst werden, um den Filter aus dem Sammelbehälter entnehmen zu können. Alternativ kann der Filter ohne Lösen von Sammelbehälter und Auffangprofil aus dem Sammelbehälter entnehmbar sein. Vorzugsweise ist der Sammelbehälter mit einer Filterwechselvorrichtung ausgestattet, über welchen ein verbrauchter Filter entnommen und ein neuer Filter eingesetzt werden kann.

Es ist ferner eine erfindungsgemäße Vorrichtung vorteilhaft, bei welcher das Auffangprofil zumindest abschnittsweise aus einem flexiblen Material ausgebildet ist. Vorzugsweise ist das Auffangprofil biegbar. Durch die Flexibilität des Auffangprofils kann das Auffangprofil an verschiedene Radkonturen bzw. Radgrößen und unterschiedliche Einbaupositionen angepasst werden. Durch die Ausbildung aus einem flexiblen Material können unterschiedliche Durchmesser an dem Auffangprofil eingestellt werden.

Erfindungsgemäß sind mehrere Partikelführungskanäle nebeneinander angeordnet und/oder verlaufen zumindest abschnittsweise parallel zueinander. Vorzugsweise sind benachbarte Partikelführungskanäle zumindest abschnittsweise über eine Trennwand voneinander getrennt. Über die mehreren nebeneinander angeordneten Partikelführungskanäle wird das verstopfungsbedingte Ausfallrisiko der Vorrichtung erheblich verringert. Im Falle einer Verstopfung eines Partikelführungskanals, beispielsweise aufgrund eines Fremdkörpers innerhalb des Partikelführungskanals, können die Abriebpartikel weiterhin durch die übrigen Partikelführungskanäle in den Sammelbehälter geleitet werden. Die Trennwände zwischen den Partikelführungskanälen führen außerdem zu einer Steigerung der Stabilität der Vorrichtung, sodass das Beschädigungsrisiko bei mechanischer Belastung, beispielsweise durch einen Steinschlag, erheblich verringert wird.

Die jeweiligen Partikelführungskanäle können eine übereinstimmende Geometrie aufweisen. Ferner kann die Geometrie der Partikelführungskanäle entlang der gesamten Länge oder lediglich abschnittsweise voneinander abweichen. Die Geometrie der Partikelführungskanäle kann sich entlang der jeweiligen Verläufe der Partikelführungskanäle verändern. Die Geometrieunterschiede bzw. die Geometrieveränderungen können beispielsweise den Querschnitt, etwa die Kanalbreite und/oder die Kanalhöhe, der Partikelführungskanäle betreffen.

Beispielsweise weisen außenliegende Partikelführungskanäle abschnittsweise oder über die gesamte Länge eine andere Geometrie als innenliegende Partikelführungskanäle auf. Beispielsweise weisen einzelne oder sämtliche Partikelführungskanäle entlang eines ersten Längsabschnitts eine erste Geometrie und entlang eines zweiten Längsabschnitts eine zweite Geometrie auf, wobei die erste Geometrie von der zweiten Geometrie abweicht.

Erfindungsgemäß weisen die mehreren Partikelführungskanäle jeweils einen oder mehrere Fangstege auf, welche dazu eingerichtet sind, die durch die eine oder mehreren Auffangöffnungen in das Auffangprofil gelangten Abriebpartikel an dem Herausfallen aus der einen oder den mehreren Auffangöffnungen zu hindern. Die Fangstege können außenliegende Fangschultern sein, in welchen die Auffangöffnungen ausgebildet sind. Alternativ oder zusätzlich können ein oder mehrere Fangstege als interne Fanglippen ausgebildet sein, welche innerhalb der Partikelführungskanäle ausgebildet sind. Die Fangstege können auch als Dachwinkelprofile ausgebildete Stegdächer sein, durch welche der Querschnitt der Auffangöffnungen in Richtung des jeweiligen Kanalinnenraums der Partikelführungskanäle verkleinert wird. Die Fangstege der Partikelführungskanäle können beabstandet voneinander sein, beispielsweise weisen mehrere Fangstege einen Höhenversatz zueinander auf. Die Fangstege können auch kanalinterne Fanglamellen sein, welche gekrümmt oder gebogen ausgebildet sein können. Alternativ oder zusätzlich zu den Fangstegen kann an oder in den Auffangöffnungen ein Sieb angeordnet sein. Das Sieb ist vorzugsweise dazu eingerichtet, die durch die eine oder die mehreren Auffangöffnungen in das Auffangprofil gelangten Abriebpartikel an dem Herausfallen aus der einen oder den mehreren Auffangöffnungen zu hindern. Das Auffangprofil kann beispielsweise als Labyrinthprofil ausgebildet sein, wobei die Labyrinthstruktur durch den einen oder die mehreren Fangstege umgesetzt wird. Innerhalb der Partikelführungskanäle können ferner Leitschrägen mit Abprallflächen angeordnet sein, wobei die Abprallflächen derart gestaltet sind, dass die Abriebpartikel von den Abprallflächen in Richtung der Fangstege abprallen, sodass die abgeprallten Abriebpartikel von den Fangstegen gefangen werden.

In den jeweiligen Partikelführungskanälen können die gleichen Fangstege angeordnet sein. Ferner können in den Partikelführungskanälen entlang der gesamten Länge oder lediglich abschnittsweise unterschiedliche Fangstege angeordnet sein. Die Position, Form und/oder Anzahl der Fangstege in den jeweiligen Partikelführungskanälen kann sich entlang der jeweiligen Verläufe der Partikelführungskanäle verändern.

In einer anderen bevorzugten Ausführungsform der erfindungsgemäßen Vorrichtung ist in den mehreren Partikelführungskanälen ein Stoßdämpfungsmaterial angeordnet. Das Stoßdämpfungsmaterial ist vorzugsweise dazu eingerichtet, Abriebpartikel beim Aufprall auf die Oberfläche des Stoßdämpfungsmaterials abzubremsen. Das Stoßdämpfungsmaterial kann beispielsweise ein Schaum sein. Der Schaum kann ein offenporiger oder ein geschlossenporiger Schaum sein. Alternativ kann das Stoßdämpfungsmaterial ein Moosmaterial sein.

In einer weiteren bevorzugten Ausführungsform der erfindungsgemäßen Vorrichtung ist in den mehreren Partikelführungskanälen ein Anhaftmaterial angeordnet, an welchem Abriebpartikel bei In-Kontakt-Kommen mit dem Anhaftmaterial anhaften. Das Anhaftmaterial kann beispielsweise ein Fasermaterial sein. Beispielsweise umfasst das Anhaftmaterial eine Vielzahl von elektrostatischen Fasern. Das Anhaftmaterial kann auch durch magnetische Lamellen ausgebildet werden, wobei die Lamellen beispielsweise permanent- oder elektromagnetisch sein können.

In einer anderen bevorzugten Ausführungsform der erfindungsgemäßen Vorrichtung ist an dem Auffangprofil Schalldämpfungsmaterial angeordnet. Das Schalldämpfungsmaterial ist vorzugsweise dazu eingerichtet, den durch den Aufprall der Abriebpartikel vom Auffangprofil oder durch ein Abrollgeräusch eines Rads des Fahrzeugs erzeugten akustischen Schall zu reduzieren. Durch das Schalldämpfungsmaterial wird eine Komfortbeeinträchtigung durch akustische Störungen, welche auf den Betrieb der Vorrichtung zurückzuführen sind, effektiv vermieden. Das Schalldämpfungsmaterial kann beispielsweise ein Schaummaterial oder ein Gummimaterial sein.

In den jeweiligen Partikelführungskanälen kann das gleiche Stoßdämpfungsmaterial, Schalldämpfungsmaterial und/oder Anhaftmaterial angeordnet sein. Ferner können in den Partikelführungskanälen entlang der gesamten Länge oder lediglich abschnittsweise unterschiedliche Stoßdämpfungsmaterialien, Schalldämpfungsmaterialien und/oder Anhaftmaterialien angeordnet sein. Ferner kann in einem oder in mehreren Partikelführungskanälen Stoßdämpfungsmaterial, Schalldämpfungsmaterial und/oder Anhaftmaterial angeordnet sein und in einem oder in mehreren Partikelführungskanälen ist kein Stoßdämpfungsmaterial, Schalldämpfungsmaterial und/oder Anhaftmaterial angeordnet. Ferner kann in einem, mehreren oder sämtlichen Partikelführungskanälen lediglich abschnittsweise Stoßdämpfungsmaterial, Schalldämpfungsmaterial und/oder Anhaftmaterial angeordnet sein.

Es ist außerdem eine erfindungsgemäße Vorrichtung bevorzugt, bei welcher das Auffangprofil zumindest einen Absaugkanal aufweist, welcher mit den mehreren Partikelführungskanälen verbunden ist. Vorzugsweise ist der Absaugkanal dazu eingerichtet, Abriebpartikel aus den mehreren Partikelführungskanälen abzusaugen. Vorzugsweise werden die abgesaugten Abriebpartikel über den Absaugkanal dem Sammelbehälter zugeführt. Über den Absaugkanal kann beispielsweise eine Vakuumabsaugung realisiert werden. Die Saugwirkung kann aktiv oder passiv erzeugt werden. Bei einem passiven Absaugkanal kann die Kanalbewandung beispielsweise ein oder mehrere Kanalverengungen aufweisen, welche als Saugdüsen wirken. Bei einer aktiven Absaugung umfasst die Vorrichtung beispielsweise ein Strömungserzeuger, mittels welcher eine Saugströmung erzeugt werden kann. Der Strömungserzeuger kann beispielsweise ein Lüfter oder Ventilator sein.

Es ist darüber hinaus eine erfindungsgemäße Vorrichtung bevorzugt, bei welcher in den mehreren Partikelführungskanälen elastische Fanglamellen angeordnet sind, welche dazu eingerichtet sind, Abriebpartikel zwischen benachbarten Fanglamellen aufzunehmen. Die Fanglamellen können beispielsweise überlappend angeordnet sein und/oder eine Kiemenstruktur bilden. Die elastischen Fanglamellen können beispielsweise aus einem thermoplastischen Material ausgebildet sein. Beispielsweise sind die elastischen Fanglamellen aus Gummi ausgebildet.

Die der Erfindung zugrundeliegende Aufgabe wird ferner durch ein Fahrzeug der eingangs genannten Art gelöst, wobei die Vorrichtung des erfindungsgemäßen Fahrzeugs nach einer der vorstehend beschriebenen Ausführungsformen ausgebildet ist. Hinsichtlich der Vorteile und Modifikationen des erfindungsgemäßen Fahrzeugs wird auf die Vorteile und Modifikationen der erfindungsgemäßen Vorrichtung verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Vorrichtung in einer schematischen Seitenansicht;
- Fig. 2: ein Auffangprofil einer erfindungsgemäßen Vorrichtung in einer schematischen Schnittdarstellung;
- Fig. 3: ein Auffangprofil einer weiteren erfindungsgemäßen Vorrichtung in einer schematischen Schnittdarstellung;
- Fig. 4: ein Auffangprofil einer weiteren erfindungsgemäßen Vorrichtung in einer schematischen Schnittdarstellung;
- Fig. 5: ein Auffangprofil einer weiteren erfindungsgemäßen Vorrichtung in einer schematischen Schnittdarstellung;
- Fig. 6: ein Auffangprofil einer weiteren erfindungsgemäßen Vorrichtung in einer schematischen Schnittdarstellung;
- Fig. 7: ein Auffangprofil einer weiteren erfindungsgemäßen Vorrichtung in einer schematischen Schnittdarstellung;
- Fig. 8: ein Auffangprofil einer weiteren erfindungsgemäßen Vorrichtung in einer schematischen Schnittdarstellung;
- Fig. 9: ein Auffangprofil einer weiteren erfindungsgemäßen Vorrichtung in einer schematischen Schnittdarstellung;
- Fig. 10: ein Auffangprofil einer weiteren erfindungsgemäßen Vorrichtung in einer schematischen Schnittdarstellung;
- Fig. 11: ein Auffangprofil einer weiteren erfindungsgemäßen Vorrichtung in einer schematischen Schnittdarstellung;
- Fig. 12: ein Auffangprofil einer weiteren erfindungsgemäßen Vorrichtung in einer schematischen Schnittdarstellung;
- Fig. 13: ein Auffangprofil einer weiteren erfindungsgemäßen Vorrichtung in einer schematischen Schnittdarstellung;
- Fig. 14: ein Auffangprofil einer weiteren erfindungsgemäßen Vorrichtung in einer schematischen Schnittdarstellung;
- Fig. 15: ein Auffangprofil einer weiteren erfindungsgemäßen Vorrichtung in einer schematischen Schnittdarstellung;
- Fig. 16: ein Auffangprofil einer weiteren erfindungsgemäßen Vorrichtung in einer schematischen Draufsicht;
- Fig. 17: das in der Fig. 16 abgebildete Auffangprofil in einer seitlichen Schnittdarstellung; und
- Fig. 18: das in der Fig. 16 abgebildete Auffangprofil im verbauten Zustand im Nahbereich eines Rads eines Fahrzeugs in einer schematischen Darstellung.

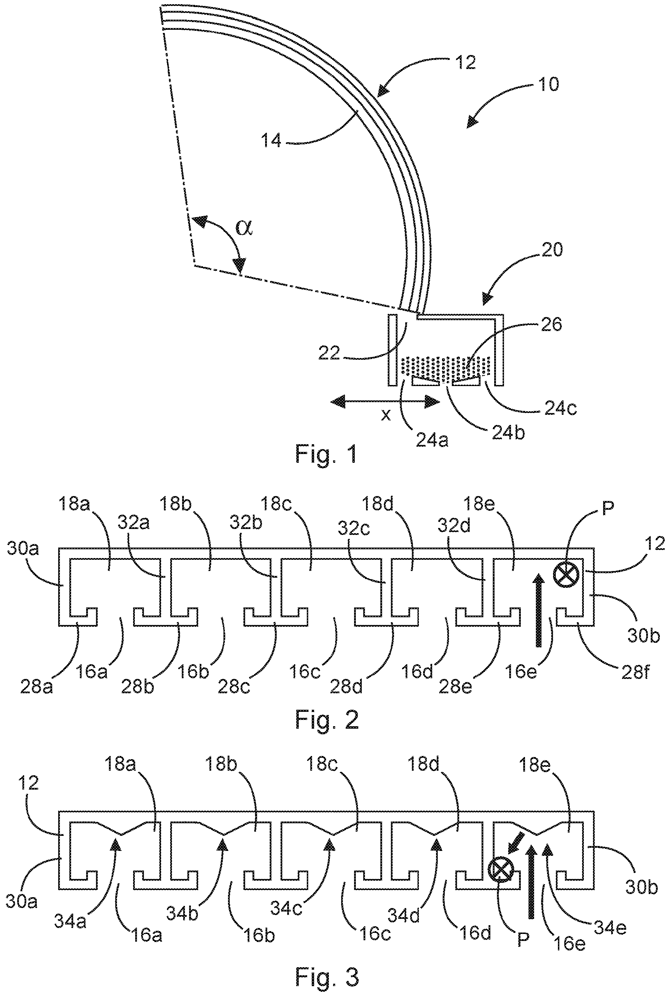

Die Fig. 1 zeigt eine Vorrichtung 10 zum Sammeln von Abriebpartikeln **P,** welche während der Verwendung eines Fahrzeugs im Radbereich entstehen. Die Abriebpartikel P entstehen beispielsweise aufgrund von Reifenabrieb und/oder Straßenbelagsabrieb. Ferner können die Abriebpartikel P Bremsbelagpartikel oder Bremsscheibenpartikel sein, welche während eines Bremsvorgangs freigesetzt werden.

Die Vorrichtung 10 umfasst ein gebogenes Auffangprofil 12 für Abriebpartikel P, wobei sich das Auffangprofil 12 über einen Winkelbereich α erstreckt. Die Winkelerstreckung α kann beispielsweise in einem Bereich von 45-180° liegen. Unterhalb des Auffangprofils 12 ist ein Sammelbehälter 20 für aufgefangene Abriebpartikel P angeordnet. Die mittels des Auffangprofils 12 aufgefangenen Abriebpartikel P können über die Partikeleinlassöffnung 22 in den Sammelbehälter 20 gelangen. Der Sammelbehälter 20 weist mehrere Abführöffnungen 24a-24c auf, über welche Wasser aus dem Sammelbehälter 20 abführbar ist. Die Abführöffnungen 24a-24c befinden sich im Boden des Sammelbehälters 20 und sind als Durchgangslöcher ausgebildet. Durch die Abführöffnungen 24a-24c kann Wasser aus dem Sammelbehälter 20 entweichen. Oberhalb der Abführöffnungen 24a-24c ist ein Filter 26 innerhalb des Sammelbehälters 20 angeordnet. Der Filter 26 verhindert einen Austritt von Abriebpartikeln P aus den Abführöffnungen 24a-24c. Der Sammelbehälter 20 kann entlang der Horizontalen, also entlang der Verschieberichtung x verschoben werden, damit die Partikeleinlassöffnung 22 des Sammelbehälters 20 präzise relativ zu dem Auffangprofil 12 positioniert werden kann. Das Auffangprofil 12 und der Sammelbehälter 20 sind vorzugsweise aus Kunststoff ausgebildet. Das Auffangprofil kann aus einem flexiblen Kunststoffmaterial ausgebildet sein, sodass die Form des Auffangprofils 12 an eine Radgröße oder an die Geometrie eines Radhauses eines Fahrzeugs angepasst werden kann.

Die Fig. 2 zeigt ein Auffangprofil 12 mit mehreren nebeneinander angeordneten und parallel zueinander verlaufenden Partikelführungskanälen 18a-18e. Das Auffangprofil 12 weist auf der Innenseite 14 mehrere Auffangöffnungen 16a-16e auf, über welche Abriebpartikel P in die Partikelführungskanäle 18a-18e gelangen können. Über die Partikelführungskanäle 18a-18e sind die über die Auffangöffnungen 16a-16e in das Auffangprofil 12 gelangten Abriebpartikel P in den Sammelbehälter 12 führbar. Durch die Partikelführungskanäle 18a-18e werden Partikelführungspfade vorgegeben, entlang welchen sich die Abriebpartikel P in Richtung des Sammelbehälters 12 bewegen. Die Partikelführungskanäle 18a-18e führen die Abriebpartikel P durch Schwerkraft und durch Ausnutzung der Bewegungsenergie der Abriebpartikel P in den Sammelbehälter 20. Es ist keine elektrische Energie erforderlich, um die Abriebpartikel P aufzufangen und in den Sammelbehälter 20 zu führen. Die Vorrichtung 10 kann also stromlos verwendet werden.

Benachbarte Partikelführungskanäle 18a-18e sind über eine Trennwand 32a-32d voneinander getrennt. Seitlich wird das Auffangprofil 12 durch Seitenwände 30a, 30b begrenzt. Die Partikelführungskanäle 18a-18e weisen als Fangschultern ausgebildete Fangstege 28a-28f auf. Die Fangstege 28a-28f hindern die durch die Auffangöffnungen 16a-16e in das Auffangprofil 12 gelangten Abriebpartikel P an dem Herausfallen aus den Auffangöffnungen 16a-16e.

Bei dem in der Fig. 3 dargestellten Auffangprofil 12 sind in den Partikelführungskanälen 18a-18e Leitschrägen 34a-34e angeordnet. Die Leitschrägen 34a-34e weisen Abprallflächen auf, über welche ein Abprallen der Abriebpartikel P in Richtung der als Fangschultern ausgebildeten Fangstege 28a-28f gefördert wird.

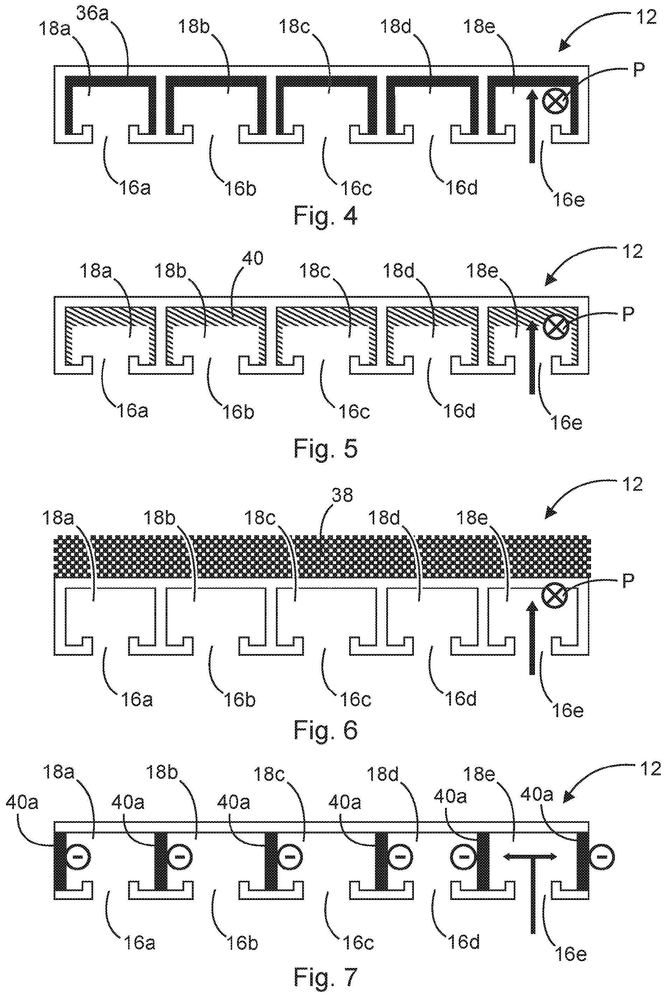

Die Fig. 4 zeigt ein Auffangprofil 12, bei welchem innerhalb der Partikelführungskanäle 18a-18e ein Stoßdämpfungsmaterial 36a angeordnet ist. Das Stoßdämpfungsmaterial 36a ist ein Schaummaterial, wobei sowohl offenporige als auch geschlossen-porige Schaummaterialien eingesetzt werden können. Das Stoßdämpfungsmaterial 36a dient dazu, die Abriebpartikel P beim Aufprall auf die Oberfläche des Stoßdämpfungsmaterials 36a abzubremsen.

Die Fig. 5 zeigt ein Auffangprofil 12, bei welchem ein Anhaftmaterial 40 in den Partikelführungskanälen 18a-18e angeordnet ist. Die Abriebpartikel P haften bei In-Kontakt-Kommen mit dem Anhaftmaterial 40 an dem Anhaftmaterial 40 an. Das Anhaftmaterial 40 besteht aus elektrostatischen Fasern.

Bei dem in der Fig. 6 dargestellten Auffangprofil 12 ist auf der Außenseite des Auffangprofils 12 Schalldämpfungsmaterial 38 angeordnet. Das Schalldämpfungsmaterial 38 reduziert den durch den Aufprall der Abriebpartikel P vom Auffangprofil 12 oder durch das Abrollgeräusch der Räder erzeugten akustischen Schall. Das Schalldämpfungsmaterial 38 kann beispielsweise ein Schaummaterial sein, welches auf die Rückseite des Auffangprofils 12 aufgeklebt ist.

Die Fig. 7 zeigt ein Auffangprofil 12, bei welchem die Seitenwände des Auffangprofils 12 und die Trennwände zwischen benachbarten Partikelführungskanälen 18a-18e aus einem elektrostatischen Anhaftmaterial 40a ausgebildet sind. Die Trennwände 32a-32d sind elektrostatische Lamellen, an welchen Abriebpartikel P bei In-Kontakt-Kommen anhaften.

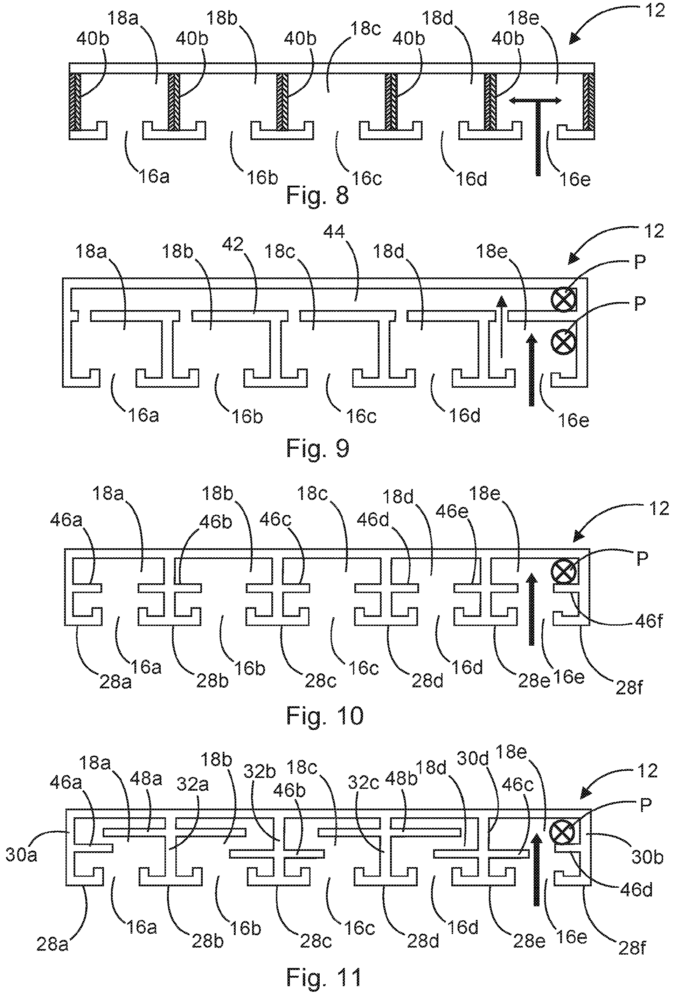

Bei dem in der Fig. 8 abgebildeten Auffangprofil 12 sind die Seitenwände des Auffangprofils 12 und die Trennwände zwischen benachbarten Partikelführungskanälen 18a-18e als permanent- oder elektromagnetische Lamellen aus einem Anhaftmaterial 40b ausgebildet. Bei Bestromung der elektromagnetischen Lamellen haften Abriebpartikel P bei In-Kontakt-Kommen an dem Anhaftmaterial 40b an.

Bei dem in der Fig. 9 dargestellten Auffangprofil 12 wird ein Absaugkanal 44 eingesetzt, welcher hinter den Partikelführungskanälen 18a-18e angeordnet ist. Die Partikelführungskanäle 18a-18e und der Absaugkanal 44 werden durch den Zwischenboden 42 voneinander getrennt, wobei in dem Zwischenboden 42 Ausnehmungen vorhanden sind, welche die Partikelführungskanäle 18a-18e pneumatisch mit dem Absaugkanal 44 verbinden. Mittels des Absaugkanals 44 werden Abriebpartikel P aus den Partikelführungskanälen 18a-18e abgesaugt. Der Absaugkanal 44 ist mit einem Sammelbehälter 20 verbunden, sodass sich die abgesaugten Abriebpartikel P in dem Sammelbehälter 20 sammeln.

Bei dem in der Fig. 10 dargestellten Auffangprofil 12 sind in den Partikelführungskanälen 18a-18e weitere Fangstege 46a-46f angeordnet, welche als interne Fanglippen ausgebildet sind. Die als interne Fanglippen ausgebildeten Fangstege 46a-46f verlaufen parallel zu den als Fangschultern ausgebildeten Fangstegen 28a-28f. Die Fangstege 28a-28f, 46a-46f hindern die durch die Auffangöffnungen 16a-16e in das Auffangprofil 12 gelangten Abriebpartikel P an dem Herausfallen aus den Auffangöffnungen 16a-16e.

Bei dem in der Fig. 11 abgebildeten Auffangprofil 12 sind in den Partikelführungskanälen 18a-18e als interne Fanglippen ausgebildete Fangstege 46a-46d sowie davon beabstandete ebenfalls als interne Fanglippen ausgebildete Fangstege 48a, 48b angeordnet. Die Fangstege 46a-46d werden von den Seitenwänden 30a, 30b und den Trennwänden 32b, 32d getragen. Die Fangstege 48a, 48b werden von den Trennwänden 32a, 32c getragen. Durch die Fangstege 28a-28f, 46a-46d, 48a, 48b ergibt sich eine Labyrinthstruktur innerhalb der Partikelführungskanäle 18a-18e, durch welche das Herausfallrisiko für aufgefangene Abriebpartikel P erheblich verringert ist.

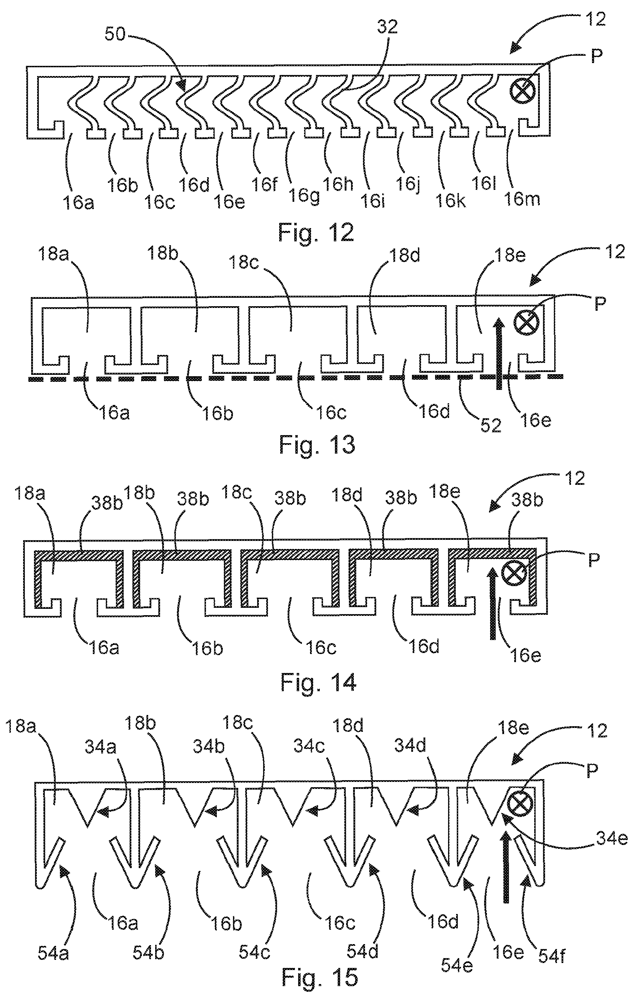

Das in der Fig. 12 dargestellte Auffangprofil 12 weist Auffangöffnungen 16a-16m auf. Die mit den Auffangöffnungen 16a-16m verbundenen Partikelführungskanäle sind über gekrümmte Trennwände 32 voneinander separiert. Die Trennwände 32 verlaufen parallel zueinander und weisen übereinstimmende Krümmungen 50 auf.

Die Fig. 13 zeigt ein Auffangprofil, bei welchen vor den Auffangöffnungen 16a-16e ein Sieb 52 angeordnet ist, wobei Abriebpartikel P durch das Sieb 52 in die Partikelführungskanäle 18a-18e gelangen können. Das Sieb 52 hindert die in den Partikelführungskanälen 18a-18e befindlichen Abriebpartikel P an dem Herausfallen durch die Auffangöffnungen 18a-18e.

Die Fig. 14 zeigt ein Auffangprofil 12, bei welchem innerhalb der Partikelführungskanäle ein Stoßdämpfungsmaterial 36b angeordnet ist. Das Stoßdämpfungsmaterial 36b ist in diesem Fall ein Moosmaterial.

In der Fig. 15 ist ein Auffangprofil 12 abgebildet, bei welchem die Fangstege 54a-54f als Stegdächer bzw. Dachwinkelprofile ausgebildet sind. Durch eine Kombination mit Abprallflächen aufweisenden Leitschrägen 34a -34e wird das Herausfallrisiko für die Abriebpartikel P nochmals verringert.

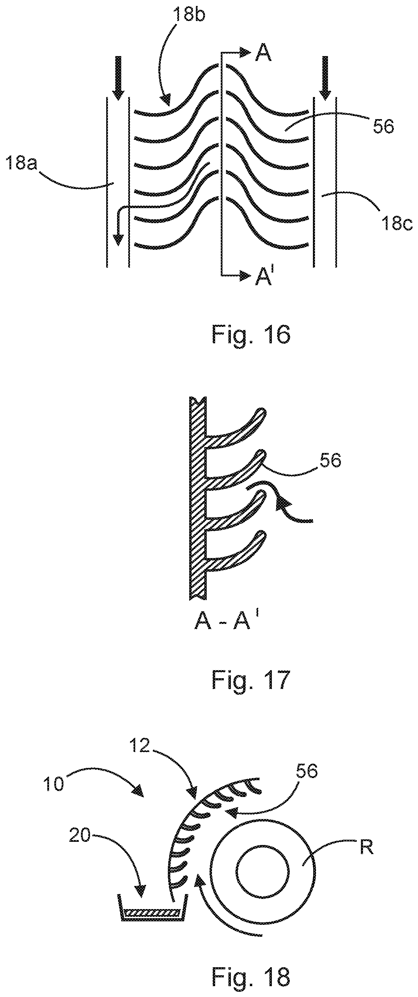

In den Fig. 16 bis 18 ist ein Auffangprofil 12 dargestellt, bei welchem in dem Partikelführungskanal 18b sich überlappende elastische Fanglamellen 56 angeordnet sind, welche gemeinsam eine Kiemenstruktur bilden. Über die Kiemenstruktur können Abriebpartikel P zwischen benachbarten Fanglamellen aufgenommen und in einen der Partikelführungskanäle 18a, 18c geleitet werden.

Die Fig. 17 zeigt, dass sich die Lamellen 56 überlappen und zwischen den Lamellen 56 Partikelführungspfade vorhanden sind, über welche die gefangenen Abriebpartikel P in einen der Partikelführungskanäle 18a, 18c geleitet werden können.

**In** der Fig. 18 ist ein Rad R eines Fahrzeugs dargestellt, wobei das Auffangprofil 12 der Vorrichtung 10 im Nahbereich des Rads R angeordnet ist und bereichsweise um das Rad R umläuft. Das Auffangprofil 12 ist mit einem Sammelbehälter 20 gekoppelt, in welchem die aufgefangenen Abriebpartikel P gesammelt werden können.

Die unterschiedlichen in den Figuren dargestellten Partikelführungskanäle 18a-18e können in anderen Auffangprofilen 12 auch miteinander kombiniert werden. Einzelne oder sämtliche Partikelführungskanäle 18a-18e können sich beispielsweise über die gesamte Länge oder lediglich abschnittsweise voneinander unterscheiden.

### Bezugszeichenliste

- 10: Vorrichtung
- 12: Auffangprofil
- 14: Innenseite
- 16a-16m: Auffangöffnungen
- 18a-18e: Partikelführungskanäle
- 20: Sammelbehälter
- 22: Partikeleinlassöffnung
- 24a-24c: Abführöffnungen
- 26: Filter
- 28a-28f: Fangstege
- 30a, 30b: Seitenwände
- 32, 32a-32d: Trennwände
- 34a-34e: Leitschrägen
- 36a, 36b: Stoßdämpfungsmaterial
- 38: Schalldämpfungsmaterial
- 40, 40a, 40b: Anhaftmaterial
- 42: Zwischenboden
- 44: Absaugkanal
- 46a-46f: Fangstege
- 48a,48b: Fangstege
- 50: Krümmungen
- 52: Sieb
- 54a-54f: Fangstege
- 56: Fanglamellen
- P: Abriebpartikel
- R: Rad
- α: Winkelerstreckung
- x: Verschieberichtung

## Patentansprüche

1. Vorrichtung (10) zum Sammeln von bei der Verwendung eines Fahrzeugs im Radbereich entstehenden Abriebpartikeln (P), mit
- einem zumindest abschnittsweise gebogenen Auffangprofil (12) für Abriebpartikel (P), wobei das Auffangprofil (12) auf einer Innenseite (14) eine oder mehrere Auffangöffnungen (16a-16m) aufweist, über welche Abriebpartikel (P) in das Auffangprofil (12) gelangen können,
und
- einen Sammelbehälter (20) für aufgefangene Abriebpartikel (P), wobei der Sammelbehälter (20) zumindest eine Abführöffnung (24a-24c) aufweist, über welche Wasser aus dem Sammelbehälter (20) abführbar ist, wobei der Sammelbehälter (20) zumindest einen Filter (26) aufweist, welcher dazu eingerichtet ist, einen Austritt von Abriebpartikeln (P) aus der Abführöffnung (24a-24c) zu verhindern,
**dadurch gekennzeichnet, dass** das Auffangprofil (12) mehrere Partikelführungskanäle (18a-18e) aufweist, über welche die durch die eine oder die mehreren Auffangöffnungen (16a-16m) in das Auffangprofil (12) gelangten Abriebpartikel (P) in den Sammelbehälter (20) führbar sind, wobei die Partikelführungskanäle (18a-18e) nebeneinander angeordnet sind und/oder zumindest abschnittsweise parallel zueinander verlaufen, wobei die mehreren Partikelführungskanäle (18a-18e) jeweils einen oder mehrere Fangstege (28a-28f, 46a-46f, 48a, 48b, 54a-54f) aufweisen, welche dazu eingerichtet sind, die durch die eine oder die mehreren Auffangöffnungen (16a-16m) in das Auffangprofil (12) gelangten Abriebpartikel (P) an dem Herausfallen aus der einen oder den mehreren Auffangöffnungen (16a-16m) zu hindern.

2. Vorrichtung (10) nach Anspruch 1,
**dadurch gekennzeichnet, dass** die mehreren Partikelführungskanäle (18a-18e) dazu eingerichtet sind, die Abriebpartikel (P) durch Schwerkraft und/oder durch Ausnutzung der Bewegungsenergie der Abriebpartikel (P) in den Sammelbehälter (20) zu leiten.

3. Vorrichtung (10) nach einem der vorstehenden Ansprüche,
**dadurch gekennzeichnet, dass** das Auffangprofil (12) zumindest abschnittsweise aus einem flexiblen Material ausgebildet ist.

4. Vorrichtung (10) nach einem der vorstehenden Ansprüche,
**dadurch gekennzeichnet, dass** benachbarte Partikelführungskanäle (18a-18e) zumindest abschnittsweise über eine Trennwand (32, 32a-32d) voneinander getrennt sind.

5. Vorrichtung (10) nach einem der vorstehenden Ansprüche,
**dadurch gekennzeichnet, dass** in dem einen oder den mehreren Partikelführungskanälen (18a-18e) ein Stoßdämpfungsmaterial (36a, 36b) angeordnet ist, welches dazu eingereicht ist, Abriebpartikel (P) beim Aufprall auf die Oberfläche des Stoßdämpfungsmaterials (36a, 36b) abzubremsen.

6. Vorrichtung (10) nach einem der vorstehenden Ansprüche,
**dadurch gekennzeichnet, dass** in den mehreren Partikelführungskanälen (18a-18e) ein Anhaftmaterial (40, 40a, 40b) angeordnet ist, an welchem Abriebpartikel (P) bei In-Kontakt-Kommen mit dem Anhaftmaterial (40, 40a, 40b) anhaften.

7. Vorrichtung (10) nach einem der vorstehenden Ansprüche,
**dadurch gekennzeichnet, dass** an dem Auffangprofil (12) Schalldämpfungsmaterial (38) angeordnet ist, welches dazu eingerichtet ist, den durch den Aufprall der Abriebpartikel (P) vom Auffangprofil (12) oder durch ein Abrollgeräusch eines Rads (R) des Fahrzeug erzeugten akustischen Schall zu reduzieren.

8. Vorrichtung (10) nach einem der vorstehenden Ansprüche,
**dadurch gekennzeichnet, dass** das Auffangprofil (12) zumindest einen Absaugkanal (44) aufweist, welcher mit den mehreren Partikelführungskanälen (18a-18e) verbunden und dazu eingerichtet ist, Abriebpartikel (P) aus den mehreren Partikelführungskanälen (18a-18e) abzusaugen.

9. Vorrichtung (10) nach einem der vorstehenden Ansprüche,
**dadurch gekennzeichnet, dass** in den mehreren Partikelführungskanälen (18a-18e) elastische Fanglamellen (56) angeordnet sind, welche dazu eingerichtet sind, Abriebpartikel (P) zwischen benachbarten Fanglamellen (56) aufzunehmen.

10. Fahrzeug, mit
- mehreren Rädern (R); und
- zumindest einer Vorrichtung (10) zum Sammeln von im Nahbereich eines Rads (R) entstehenden Abriebpartikeln (P);
**dadurch gekennzeichnet, dass** die Vorrichtung (10) nach einem der vorstehenden Ansprüche ausgebildet ist.

## Claims

1. Device (10) for collecting abrasion wear particles (P) created in the wheel region during the use of a vehicle, having
- a collection profile (12) for abrasion wear particles (P), which is at least partially curved, wherein the collection profile (12) has on an inside (14) one or a plurality of collection openings (16a-16m) by way of which abrasion wear particles (P) can make their way into the collection profile (12),
and
- a collection container (20) for collected abrasion wear particles (P), wherein the collection container (20) has at least one discharge opening (24a-24c) by way of which water from the collection container (20) is able to be discharged, wherein the collection container (20) has at least one filter (26) which is specified to prevent abrasion wear particles (P) escaping from the discharge opening (24a-24c),
**characterized in that** the collection profile (12) has a plurality of particle guide channels (18a-18e) by way of which the abrasion wear particles (P) that have reached the collection profile (12) through the one or the plurality of collection openings (16a-16m) are able to be guided into the collection container (20), wherein the particle guide channels (18a-18e) are disposed next to one another and/or run so as to be mutually parallel at least in portions, wherein the plurality of particle guide channels (18a-18e) each have one or a plurality of catch webs (28a-28f, 46a-46f, 48a, 48b, 54a-54f) which are specified to prevent the abrasion wear particles (P) that have reached the collection profile (12) through the one or the plurality of collection openings (16a-16m) falling out of the one or the plurality of collection openings (16a-16m).

2. Device (10) according to Claim 1,
**characterized in that** the plurality of particle guide channels (18a-18e) are specified to guide the abrasion wear particles (P) into the collection container (20) by gravity and/or by utilizing the kinetic energy of the abrasion wear particles (P).

3. Device (10) according to one of the preceding claims,
**characterized in that** the collection profile (12) is at least in portions formed from a flexible material.

4. Device (10) according to one of the preceding claims,
**characterized in that** adjacent particle guide channels (18a-18e) are at least in portions separated from one another by a partition wall (32, 32a-32d).

5. Device (10) according to one of the preceding claims,
**characterized in that** disposed in the one or the plurality of particle guide channels (18a-18e) is a shock-absorbing material (36a, 36b) which is specified to decelerate abrasion wear particles (P) when impacting the surface of the shock-absorbing material (36a, 36b).

6. Device (10) according to one of the preceding claims,
**characterized in that** disposed in the plurality of particle guide channels (18a-18e) is an adhesive material (40, 40a, 40b) to which abrasion wear particles (P) adhere when coming into contact with the adhesive material (40, 40a, 40b).

7. Device (10) according to one of the preceding claims,
**characterized in that** disposed on the collection profile (12) is sound-deadening material (38) which is specified to reduce the acoustic noise generated by the collection profile (12) due to the impact of the abrasion wear particles (P) or by a rolling noise of a wheel (R) of the vehicle.

8. Device (10) according to one of the preceding claims,
**characterized in that** the collection profile (12) has at least one suction channel (44) which is connected to the plurality of particle guide channels (18a-18e) and is specified to extract abrasion wear particles (P) from the plurality of particle guide channels (18a-18e).

9. Device (10) according to one of the preceding claims,
**characterized in that** disposed in the plurality of particle guide channels (18a-18e) are elastic catch lamellae (56) which are specified to receive abrasion wear particles (P) between adjacent catch lamellae (56).

10. Vehicle, having
- a plurality of wheels (R); and
- at least one device (10) for collecting abrasion wear particles (P) created in the proximity of a wheel (R);
**characterized in that** the device (10) is designed according to one of the preceding claims.

## Revendications

1. Dispositif (10) de collecte de particules d'abrasion (P) apparaissant dans la zone de roue lorsqu'un véhicule est utilisé, avec
- un profilé de récupération (12) pour particules d'abrasion (P) cintré au moins par sections, le profilé de récupération (12) comportant, sur une face intérieure (14), une ou plusieurs ouvertures de récupération (16a-16m) par lesquelles des particules d'abrasion (P) peuvent parvenir dans le profilé de récupération (12),
et
- un récipient collecteur (20) pour des particules d'abrasion (P) récupérées, le récipient collecteur (20) comportant au moins une ouverture d'évacuation (24a-24c) par laquelle de l'eau peut être évacuée hors du récipient collecteur (20), le récipient collecteur (20) comportant au moins un filtre (26) qui est mis au point pour empêcher les particules d'abrasion (P) de s'échapper de l'ouverture d'évacuation (24a-24c),
**caractérisé en ce que** le profilé de récupération (12) comporte plusieurs canaux de guidage de particules (18a-18e) par lesquels les particules d'abrasion (P) parvenant dans le profilé de récupération (12) à travers une ou plusieurs ouvertures de récupération (16a-16m) peuvent être guidées dans le récipient collecteur (20), les canaux de guidage de particules (18a-18e) étant disposés les uns à côté des autres et/ou s'étendant parallèlement les uns aux autres au moins par sections, les plusieurs canaux de guidage de particules (18a-18e) comportant chacun une ou plusieurs entretoises de capture (28a-28f, 46a-46f, 48a, 48b, 54a-54f), qui sont mises au point pour empêcher les particules d'abrasion (P) parvenues dans le profilé de récupération (12) par les une ou plusieurs ouvertures de récupération (16a-16m) de tomber hors d'une ou des plusieurs ouvertures de récupération (16a-16m).

2. Dispositif (10) selon la revendication 1,
**caractérisé en ce que** les plusieurs canaux de guidage de particules (18a-18e) sont mis au point pour guider les particules d'abrasion (P) dans le récipient collecteur (20) par gravité et/ou en utilisant l'énergie cinétique des particules d'abrasion (P).

3. Dispositif (10) selon l'une des revendications précédentes,
**caractérisé en ce que** le profilé de récupération (12) est formé au moins par sections à partir d'un matériau flexible.

4. Dispositif (10) selon l'une des revendications précédentes,
**caractérisé en ce que** des canaux de guidage de particules (18a-18e) adjacents sont séparés les uns des autres au moins par sections par une paroi de séparation (32, 32a-32d).

5. Dispositif (10) selon l'une des revendications précédentes,
**caractérisé en ce qu'**un matériau d'amortissement de chocs (36a, 36b) est disposé dans les un ou plusieurs canaux de guidage de particules (18a-18e), lequel est mis au point pour ralentir des particules d'abrasion (P) lors d'un impact sur la surface du matériau d'amortissement de chocs (36a, 36b).

6. Dispositif (10) selon l'une des revendications précédentes,
**caractérisé en ce qu'**est disposé dans les plusieurs canaux de guidage de particules (18a-18e) un matériau adhésif (40, 40a, 40b), auquel adhèrent des particules d'abrasion (P) lorsqu'elles entrent en contact avec le matériau adhésif (40, 40a, 40b).

7. Dispositif (10) selon l'une des revendications précédentes,
**caractérisé en ce qu'**est disposé sur le profilé de récupération (12) un matériau d'amortissement de chocs (38), lequel est mis au point pour réduire le bruit acoustique généré par l'impact des particules d'abrasion (P) provenant du profilé de récupération (12) ou par un bruit de roulement d'une roue (R) du véhicule.

8. Dispositif (10) selon l'une des revendications précédentes,
**caractérisé en ce que** le profilé de récupération (12) comporte au moins un canal d'évacuation par aspiration (44) qui est relié aux plusieurs canaux de guidage de particules (18a-18e) et qui est mis au point pour évacuer par aspiration des particules d'abrasion (P) hors des plusieurs canaux de guidage de particules (18a-18e).

9. Dispositif (10) selon l'une des revendications précédentes,
**caractérisé en ce que** des lamelles de récupération élastiques (56) sont disposées dans les plusieurs canaux de guidage de particules (18a-18e), lesquelles sont mises au point pour recevoir des particules d'abrasion (P) entre des lamelles de récupération (56) adjacentes.

10. Véhicule, avec
- plusieurs roues (R) ; et
- au moins un dispositif (10) de collecte de particules d'abrasion (P) apparaissant au voisinage d'une roue (R) ;
**caractérisé en ce que** le dispositif (10) est formé selon l'une des revendications précédentes.
